(19) Europäisches Patentamt
European Patent Office
Office européen des brevets

(11) Publication number: **0 166 924**
**A2**

# (12) EUROPEAN PATENT APPLICATION

(21) Application number: 85105752.1

(22) Date of filing: 10.05.85

(51) Int. Cl.[4]: H 01 F 10/24
G 02 F 1/00

(30) Priority: 02.07.84 US 627013

(43) Date of publication of application: 08.01.86 Bulletin 86/2

(84) Designated Contracting States: DE FR GB NL

(71) Applicant: ALLIED CORPORATION
Columbia Road and Park Avenue P.O. Box 2245R (Law Dept.)
Morristown New Jersey 07960(US)

(72) Inventor: Gualtieri, Devlin Michael
c/o Allied Corporation P.O. Box 2245R
Morristown, NJ 07960(US)

(72) Inventor: Tumelty, Paul Francis
c/o Allied Corporation P.O. Box 2245R
Morristown, NJ 07960(US)

(74) Representative: Myerscough, Philip Boyd et al,
J.A.Kemp & Co. 14, South Square Gray's Inn
London, WC1R 5EU(GB)

## (54) Faceted magneto-optical garnet layer.

(57) A magneto-optical element comprises a magnetic garnet layer on a crystalline substrate. The garnet layer has a faceted structure, which provides high Faraday rotation and controlled coercivity. The faceted structure is preferably formed by depositing the layer onto a substrate whose lattice constant is at least about 0.5% smaller than that of the layer. The resulting elements find application in light modulators, such as switches and displays, where they permit high resolution without having to be cut into an array of small cells.

EP 0 166 924 A2

./...

Croydon Printing Company Ltd.

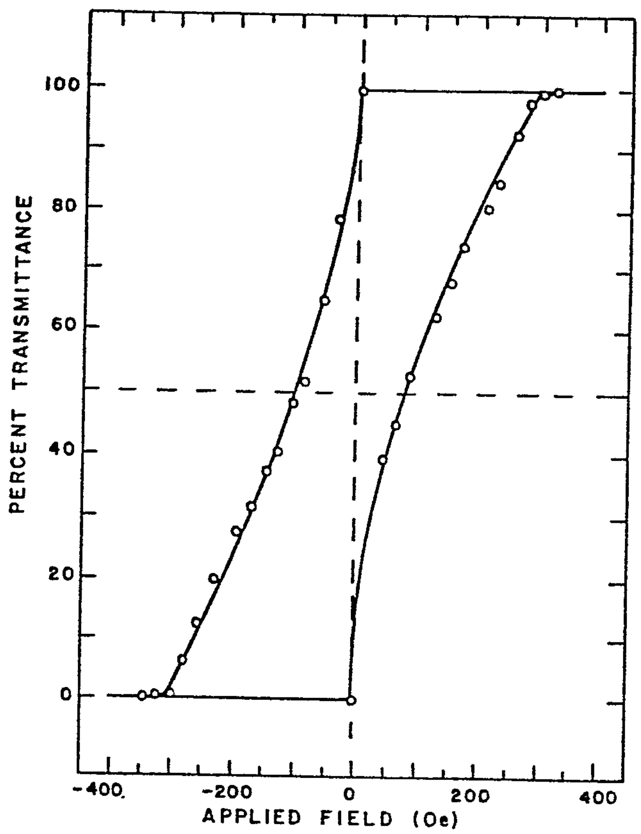
PERCENT TRANSMITTANCE
100
80
60
40
20
0
-400
-200
0
200
400
APPLIED FIELD (Oe)

FIG. 1

82-2170

# DESCRIPTION

# FACETED MAGNETO-OPTICAL GARNET LAYER

## BACKGROUND OF THE INVENTION

### 1. Field of the Invention

This invention relates to a magneto-optical layer that provides high Faraday rotation and controlled coercivity.

### 2. Description of the Prior Art

When certain materials are subjected to a strong magnetic field, they become optically active. Thus, when plane polarized light is sent through such a material in a direction parallel to an applied magnetic field, the plane of polarization is rotated. This magneto-optical effect, called the "Faraday effect," has been observed in many solids, liquids, and gases and has found a variety of applications. In material having a magnetic moment, the amount of rotation of the plane of polarization is proportional to the magnetization and to the distance traveled through the medium. For a typical application, it is desirable that the constant of the proportionality, or "specific Faraday rotation," and transmittance be high.

One application, a magneto-optical light-switching array, dubbed "Lisa," was described by J. Gosch, Electronics, December 29, 1981, pp. 53, 54. Potential applications for Lisa-type devices are in printing, electrophotography, and displays.

M. F. Shone et al., IEEE Trans. Magn. MAG-18, 1307 (1982), disclosed films of the form $Bi_xTm_{3-x}Fe_yGa_{5-y}O_{12}$, with $x \geq 0.6$, $y \approx 1.2$. The films were grown by liquid phase epitaxy on gadolinium gallium garnet (GGG) substrates. These films show high values of specific Faraday rotation (0.51-0.86 deg/μm at 632 nm) and a broad range of anisotropy fields (1000-5000 Oe).

Nelson et al., J. Appl. Phys. 53, 1687 (1982), U.S. Patent 4,295,988, issued October 20, 1981, disclosed LPE

magneto-optical crystals of $Bi_1Lu_2Fe_5O_{12}$ garnet grown on GGG substrates. They showed that optical absorption of the films could be reduced by the addition of CaO dopant. The LPE crystal is "constrained to have a similar lattice constant [to the GGG lattice constant]."

Mateika et al., U.S. Patent 4,379,853, issued April 12, 1983, disclosed a magneto-optical device whose substrate composition was chosen primarily to provide a match between the lattice constants of the magneto-optical crystal and substrate.

Bonner et al., U.S. Patent 4,265,980, issued May 5, 1981, disclosed that LPE films on GGG require that the lattice constant match within about 0.5% and that the substrate surface be smooth and flat, with a high degree of crystalline perfection.

Schmelzer et al., U.S. Patents 4,274,935, issued June 23, 1981, and 4,314,894, issued February 9, 1982, disclosed a method of preparing a magnetic layer that includes providing a lattice constant mismatch to cause the LPE layer to be stressed and thereby enhance ion implantation.

Volluet et al., U.S. Patent 4,316,162, issued February 16, 1982, disclosed a magnetostatic wave device on a GGG substrate, in which part of the substrate is roughened to increase the attenuation of the magnetostatic wave.

In general, the teaching of the prior art relating to magneto-optical films emphasizes the desirability of a close match between the lattice constants of the film and substrate crystals. Where a mismatch between the lattice constants has been disclosed, in each case the device was not magneto-optical.

## SUMMARY OF THE INVENTION

In accordance with the present invention, a magneto-optical element is provided comprising a magnetic garnet layer on a crystalline substrate and characterized in that the lattice constant of the garnet layer exceeds the lattice constant of the substrate by

at least about 0.5%. The device may be prepared by depositing, by liquid phase epitaxy (LPE), a magnetic garnet layer on a crystalline substrate whose lattice constant is less than that of the garnet layer by at least about 0.5%.

The devices of the present invention have high Faraday rotation and controlled coercivity and find application in magneto-optical light modulators, such as switches, display devices, etc.

## BRIEF DESCRIPTION OF THE DRAWINGS

Fig. 1 depicts the dependence of transmittance on applied field for a display based on the magneto-optical element of this invention.

Fig. 2 shows the dependence of switching field on film thickness for three compositions.

Fig. 3 is a schematic of a light modulator that includes a magneto-optical element of the present invention.

## DETAILED DESCRIPTION OF THE INVENTION

The present invention provides magneto-optical elements that combine Faraday rotation in excess of 2 deg/μm and controlled coercivity. They comprise a magnetic garnet layer on a crystalline substrate. In one embodiment, the compositions are chosen so that the lattice constant of the garnet layer exceeds that of the substrate by at least about 0.5%. As a result of the lattice mismatch, the garnet layer is "faceted." In other embodiments, faceting of the garnet layer is accomplished by depositing it on a substrate that has been roughened first or, alternatively, by depositing it onto an intermediate film on the substrate. When the garnet layer is deposited onto an intermediate film, the compositions are chosen so that the lattice constant of an "upper" film exceeds that of a "lower" film, or substrate, by at least about 0.5%; i.e., the lattice constant of the garnet layer exceeds that of the intermediate film or intermediate film exceeds that of the substrate.

The garnet layers of this invention are grown by liquid phase epitaxy (LPE), described in Blank et al., J. Cryst. Growth 17, 302 (1972). The optimum situation of epitaxial growth is "homoepitaxy," where the substrate and overgrowth are of the same material. The present invention involves heteroepitaxy of a garnet film on a substrate. In the conventional view, "the most important requirement for successful garnet epitaxy has been the need for lattice parameter match. This has been the best single predictor for success." (L. Varnerin, IEEE Trans. on Magn. MAG-7, 404 (1971)) Faceting of an LPE layer has been considered a defect, and identification of parameters to surpress faceting "a major achievement," (ibid.) A key element of facet suppression is good lattice match (to within 1 to 2 pm).

The present invention departs from the conventional view. Under controlled conditions, the crystal morphology of a LPE magneto-optical garnet film changes from a continuous, low-defect film to a highly defective facet structure. If they contain bismuth, these faceted films have a significantly higher Faraday rotation than continuous films grown from the same melt, because the concentration of bismuth dopant in the films is believed to increase significantly. For example, electron microprobe analysis showed about a 2-fold increase in bismuth concentration in films as faceting sets in. The Faraday rotation of such films, which is nearly proportional to bismuth content, is likewise doubled by faceting. In such melts, the lattice constant of the films generally increases as growth temperature is decreased. Since the LPE layer has a greater lattice constant than the substrate, facets develop for certain melt compositions when the growth temperature is below a critical value. If lattice mismatch is too great, epitaxial growth is prevented. Thus, the LPE film lattice constant preferably exceeds that of the substrate by less than about 2%.

Film composition is determined by a combination of

the melt composition and growth temperature. The preferred film compositions are transition metal garnets, more preferably iron garnets. In a preferred device, the garnet layer is a composition nominally represented by the formula $R_{3-d}(Ca,Sr)_d(Fe,Ni,Co,Ga)_{5-d}(Si,Ge)_dO_{12}$, where R is at least 1 element of the group consisting of Bi, Y, and the elements having atomic number from 57 to 71, and d is from 0 to about 1.5. More preferred is $(Bi,Y,Tm,Gd)_3(Fe,Ga)_5O_{12}$. The preferred substrate is gadolinium gallium garnet (GGG). When the LPE film is deposited on a GGG substrate, deposition on the (111) face is preferred.

A primary application of magneto-optical elements is in switches/displays or other light modulators. If a beam of plane polarized light is incident on an element having a magnetic easy axis normal to its surface, the plane of polarization is rotated, clockwise or counter clockwise, depending on the direction of magnetization of the film. If the rotated beam is then passed to a suitably-oriented analyzer, transmission through the analyzer will depend on the orientation of the plane of polarization of the beam. Thus, by changing the direction of the magnetization, the beam can be turned "on" and "off." The maximum on-off contrast is achieved if the device rotates the plane of polarization by 45°, creating a 90° difference in plane of polarization depending on the direction of magnetization. (Electronics, December 29, 1981, p. 53; and March 24, 1983, p. 51.) In general, the present invention provides a light modulator that comprises a magneto-optical element, described above, adapted for placement so that a beam of polarized light is incident on, and passes through, the garnet layer; an analyzer adapted for placement so that the beam, after passing through the element, is incident on the analyzer; means for applying a magnetic field to the garnet layer; and means for adjusting the magnetic field to control the light transmitted by the light modulator. The magnetization may be

switched thermally (Lisa device of Philips) or electrically (Light Mod device of Litton), with effective optical switching times of less than a microsecond. A comprehensive discussion of the Lisa and Light Mod devices, among others, appeared in P. Paroli, Thin Solid Films 114, 187 (1984).

Below saturation, the degree of polarization rotation depends on the applied field strength, film thickness, Faraday rotation constant, and saturation magnetization of the film. The devices described above require a transparent film. Other things being equal, a high Faraday rotation constant is desirable, because it permits a thinner and, therefore, more transparent film to be used. Alternatively, high transmission is desirable, because it permits a thicker film to be used, which will provide greater rotation of the plane of polarization. Thus, a magneto-optical figure of merit can be defined for a material by $\theta/\alpha$, where $\theta$ is the specific Faraday rotation and $\alpha$ the absorption. (See G.B. Scott et al., IEEE Trans. on Magn. MAG-12, 292 (1976).) Figures of merit as a function of incident wavelength for various garnet materials were reported by Hansen et al., Landolt-Bornstein, Group III, Vol. 12, "Magnetic and Other Properties of Oxides and Related Compounds," part a "Garnets and Perovskites," Springer-Verlag, N.Y., 1978, p. 196.

A common characteristic of the magneto-optical compositions discussed above is that they have little or no coercivity. As a result, the materials lose their net magnetization in the absence of an applied field. To avoid having to maintain an applied field, the devices prepared from these compositions are divided into cells. Each cell comprises a single domain that retains its magnetization in zero applied field. In contrast to this, the present devices have non-zero coercivity, which provides several advantages. First, there is no need to divide the film into domain-sized cells. Secondly, the magnetization of the present layer can be

continuously varied by an applied field to provide a range of values of transmitted light. The small cells of earlier magneto-optical devices are 2-level, having a fixed magnetization, with only the direction variable. Finally, the parameters of the small cells are sensitive to crystal defects, while the present films have a high dislocation density and are thus less sensitive to crystal defects.

Fig. 1 shows the optical absorption hysteresis of a faceted magneto-optical film placed between polarizer and analyzer plates oriented so that the relative light intensity transmitted by the analyzer tracks the magnetization of the film. Thus, the film shows a typical "B-H loop" hysteresis in response to an applied magnetic field. In practice, the film is first 100% saturated, and the polarizer and analyzer then oriented to provide minimum light transmittance. Saturation is achieved when a field of about 300 Oe is applied, and the film maintains this saturated state when the field is removed. Application of a field of about 300 Oe in the opposite direction brings the film to saturation in the opposite direction (maximum light transmittance), which also remains when the field is removed. The applied field, $H_s$, necessary for switching between 0 and 100% relative transmittance (in this case, 300 Oe) is somewhat greater than the coercivity, $H_c$, which is the applied field at which the magnetization is zero (50% transmittance).

Fig. 2 shows the dependence of switching field on film thickness and composition. As is shown there, switching field generally decreases with increasing film thickness. The compositional dependence is not quite as simple. $R_2$ has been defined as the ratio of transition metal atoms (in this case iron) to non-magnetic atoms (in this case gallium) in the melt from which the faceted magneto-optical films are grown. Decreasing $R_2$ reflects increased substitution of Ga for Fe in the film composition. Over the range of $R_2$ values plotted in

Fig. 2, switching field increases with increasing Ga substitution, which corresponds to decreasing saturation magnetization. However, a minimum saturation magnetization is achieved when the net spin of the transition metal atoms is a minimum (or 0). Additional substitution causes an increase in saturation magnetization. (As was discussed earlier, film composition depends on both melt composition and temperature.) By adjusting film composition and thickness, a range of desirable switching field values can be achieved.

Although the preferred method for preparing the present films is to deposit them on a substrate having the appropriate smaller lattice constant, other suitable methods have been found. One method involves first roughening the substrate surface. Films deposited on an appropriately roughened surface develop the highly defective facet structure that characterizes the layers of the present invention. Roughening can be accomplished in various ways, well known in the art. For example, polishing with a 1-μm grit has been found suitable.

In another method, a crystalline intermediate film is first deposited onto the substrate; the garnet layer is then deposited onto the intermediate film. The garnet layer has a lattice constant that exceeds that of the intermediate film (or the intermediate film exceeds that of the substrate) by at least about 0.5%.

Fig. 3 depicts a light modulator of the present invention. Polarized light, for example from a source of unpolarized light and a polarizer 1, passes through magneto-optical element 2 of thickness t. (For simplicity, the substrate is not shown). The magnetization in the cross-hatched area inside a loop 3, having a desired shape, has been switched antiparallel to the magnetization in the rest of the element by passing a current pulse through the loop from current source 4. Because of the coercivity of the element, the magnetization

remains switched after the current pulse is removed. The electric field vector E of the polarized light passing through the cross-hatched area is rotated through an angle θt because of the Faraday effect. For the light transmitted through the area outside the loop, E is rotated through an angle -θt. The polarizing axis 5 of analyzer 6 is oriented 90° from the direction of the E vector of the light that has passed through the cross-hatched area. Thus, this light is blocked, and a corresponding area of screen 7 is dark. However, the E vector of the light transmitted through the area of the element outside the loop is at an angle 90°-2θt from the analyzer axis. This light, whose intensity is a maximum when θt = 45°, reaches the screen and produces a light background.

The following examples are presented in order to provide a more complete understanding of the invention. The specific techniques, conditions, materials, and reported data set forth to illustrate the principles and practice of the invention are exemplary and should not be construed as limiting the scope of the invention.

EXAMPLE 1

A film of composition $(Bi,Y,Tm,Gd)_3(Fe,Ga)_5O_{12}$ was grown on a (111)-oriented substrate of $Gd_3Ga_5O_{12}$ from the following melt:

$R_1 = Fe_2O_3/RE_2O_3 = 35$
$R_2 = Fe_2O_3/Ga_2O_3 = 7$
$R_4$ = solute concentration = 0.16
$PbO/2Bi_2O_3 = 2.1$
$PbO/2B_2O_3 = 11.7$
$Y_2O_3/RE_2O_3 = 0.25$
$Tm_2O_3/RE_2O_3 = 0.55$
$Gd_2O_3/RE_2O_3 = 0.20$

The "R" parameters are those defined in S.L. Blank et al., IEEE Trans. Magn. MAG-13, 1095 (1977), with PbO, $B_2O_3$, and $Bi_2O_3$ constituting the flux, and $RE_2O_3$ designating the sum of the yttrium and rare-earth additions. The film was grown at 735°C for five minutes at

a unidirectional rotation rate of 200 rev/min. This resulted in a film of 3.25 μm thickness, a Curie temperature $T_C$ of 201.8°C, a lattice constant of 1.2456 nm (as measured normal to the film surface), and a specific Faraday rotation θ of 3.53 deg/μm, as measured at 546.1 nm.

EXAMPLES 2-17

Films similar to that described in EXAMPLE 1 were grown to investigate thickness and composition effects. The melt composition was the same, except that $R_2$ was varied from 6 to 8, and the $PbO/2Bi_2O_2$ ratio was 2.5. A growth temperature of about 720°C was used, which gave a growth rate of about 0.4 μm/min, and the growth time was varied to obtain desired thicknesses. The Table summarizes the film properties, including the switching field data that appear in Fig. 2.

Table

| Example | $R_2$ | Thickness (μm) | $H_s$ (Oe) | $T_C$ (K) | Lattice Constant a (nm) | θ at 546.1 nm (deg/μm) |
|---|---|---|---|---|---|---|
| 2 | 6.0 | 1.44 | 267 | 455.0 | 1.24500 | 2.72 |
| 3 | 6.0 | 2.14 | 200 | 454.7 | 1.24492 | 2.80 |
| 4 | 6.0 | 3.67 | 141 | 454.1 | 1.24503 | 3.02 |
| 5 | 6.0 | 4.89 | 114 | 452.6 | 1.24503 | 2.93 |
| 6 | 6.0 | 7.67 | 81 | 455.2 | 1.24523 | 3.09 |
| 7 | 6.5 | 7.30 | 60 | 461.8 | 1.24543 | 3.14 |
| 8 | 7.0 | 1.36 | 176 | 469.2 | (1.24500)* | 2.80 |
| 9 | 7.0 | 2.18 | 140 | 469.6 | 1.24504 | 3.06 |
| 10 | 7.0 | 5.32 | 70 | 466.8 | 1.24476 | 2.80 |
| 11 | 7.0 | 7.01 | 50 | 469.7 | 1.24522 | 3.30 |
| 12 | 7.0 | 7.95 | 48 | 469.1 | 1.24539 | 3.27 |
| 13 | 8.0 | 1.35 | 153 | 483.8 | 1.24511 | 3.13 |
| 14 | 8.0 | 2.14 | 96 | 483.2 | 1.24507 | 3.25 |
| 15 | 8.0 | 3.55 | 60 | 483.7 | 1.24525 | 3.42 |
| 16 | 8.0 | 4.95 | 40 | 480.7 | 1.24565 | 3.38 |
| 17 | 8.0 | 7.88 | 36 | 483.5 | 1.24522 | 3.43 |

* Estimated.

We claim:

1. A magneto-optical element comprising

a magnetic garnet layer on a crystalline substrate, characterized in that the lattice constant of the garnet layer exceeds the lattice constant of the substrate by at least about 0.5%.

2. The element of claim 1 in which the garnet layer has a composition nominally represented by the formula $R_{3-d}(Ca,Sr)_d(Fe,Ni,Co,Ga)_{5-d}(Si,Ge)_dO_{12}$, where R is at least 1 element of the group consisting of Bi,Y, and the elements having atomic number from 57-71, and d is from 0 to about 1.5.

3. The element of claim 2 in which the garnet is $(Bi,Y,Tm,Gd)_3(Fe,Ga)_5O_{12}$.

4. The element of claim 1 in which the garnet layer is on the (111) face of a GGG substrate.

5. The element of claim 1 in which the lattice constant of the garnet layer exceeds the lattice constant of the substrate by less than about 2%.

6. A light modulator comprising

the magneto-optical element of claim 1 adapted for placement so that a beam of polarized light is incident on, and passes through, the layer,

an analyzer adapted for placement so that the beam, after passing through the element, is incident on the analyzer,

means for applying a predetermined magnetic field to the layer, and

means for adjusting the magnetic field to control the light transmitted by the light modulator.

7. A process for preparing a magneto-optical element comprising depositing by liquid phase epitaxy a magnetic garnet layer on a crystalline substrate, characterized in that the lattice constant of the garnet exceeds the lattice constant of the substrate by at least about 0.5%.

8. A process for preparing a magneto-optical element comprising roughening the surface of a

crystalline substrate and depositing on the substrate by liquid phase epitaxy a single crystal magnetic garnet layer.

9. A process for preparing a magneto-optical element comprising depositing on a crystalline surface an intermediate crystalline film and depositing on the intermediate film by liquid phase epitaxy a magnetic garnet layer whose lattice constant exceeds the lattice constant of the intermediate film by at least about 0.5%.

10. A process for preparing a magneto-optical element comprising depositing on a crystalline surface an intermediate crystalline film whose lattice constant exceeds the lattice constant of the substrate by at least about 0.5%, and depositing on the intermediate film a magnetic garnet layer.

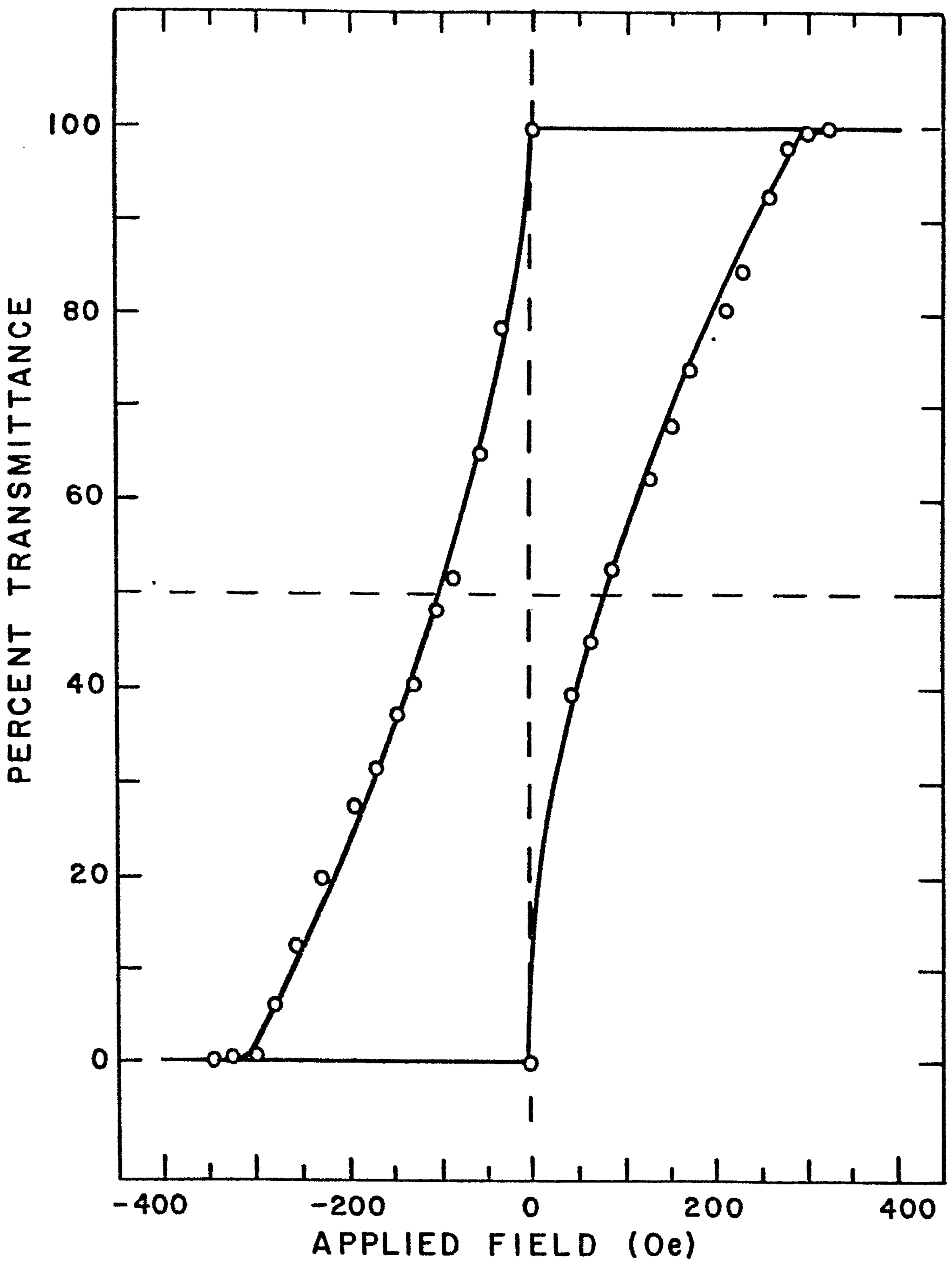
PERCENT TRANSMITTANCE
100
80
60
40
20
0
-400
-200
0
200
400
APPLIED FIELD (Oe)

FIG. 1

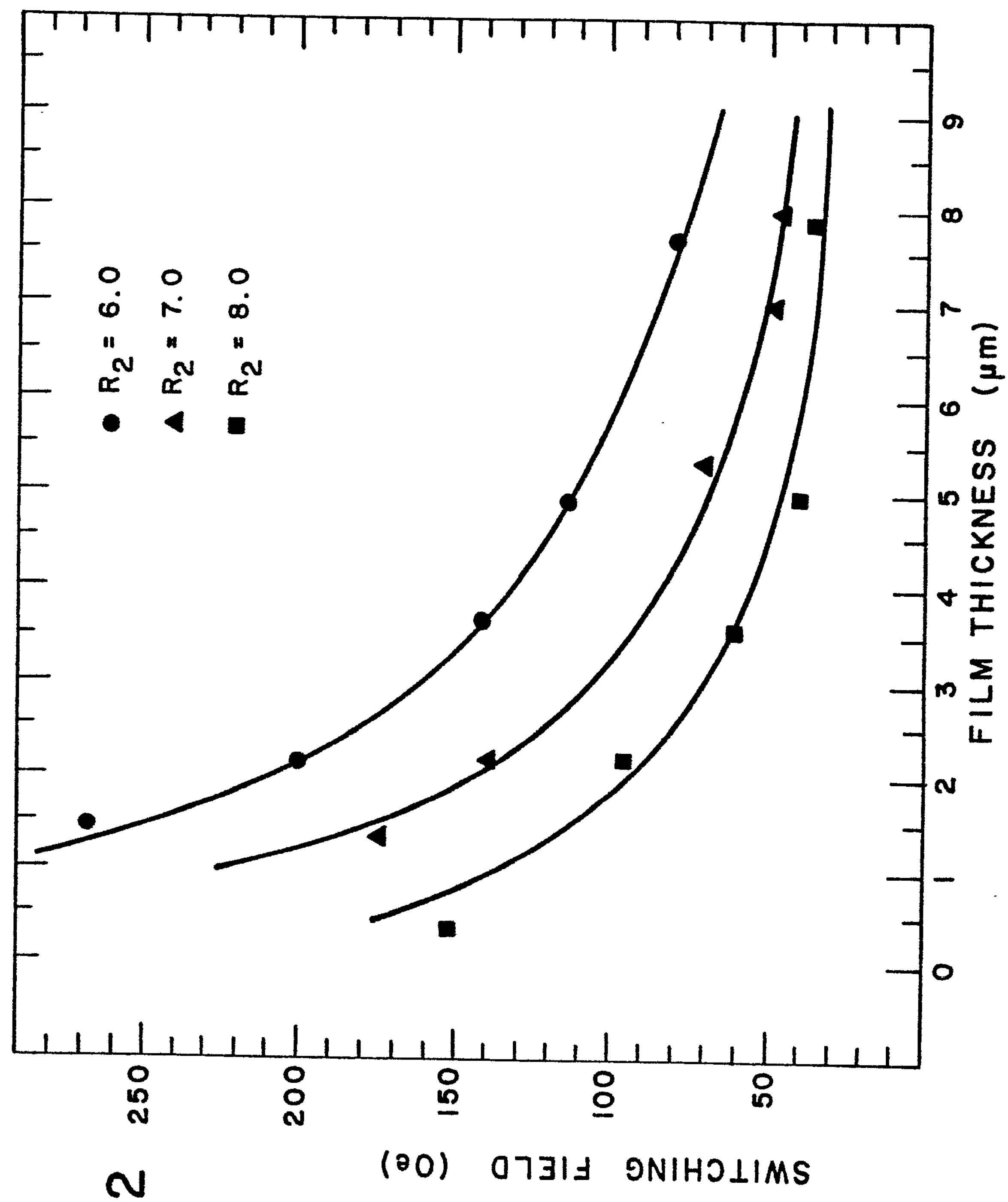

● $R_2$ = 6.0
▲ $R_2$ = 7.0
■ $R_2$ = 8.0
SWITCHING FIELD (Oe)
250
200
150
100
50
FILM THICKNESS (μm)
0
1
2
3
4
5
6
7
8
9


FIG. 2

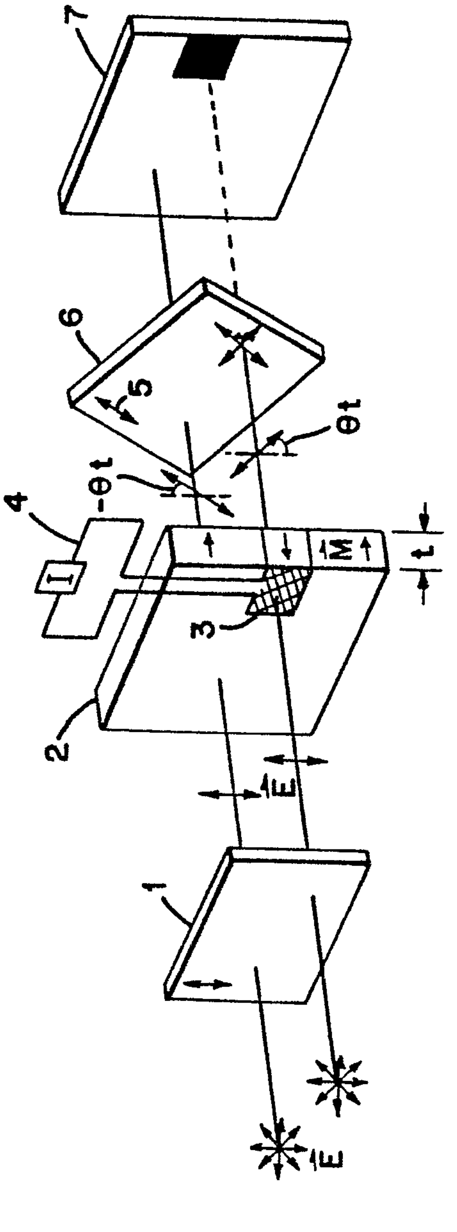


FIG. 3